# EUROPÄISCHE PATENTANMELDUNG

(11) **EP 2 174 833 A2**
(43) Veröffentlichungstag der Anmeldung: **14.04.2010**
(21) Anmeldenummer: 09009843.5
(22) Anmeldetag: 30.07.2009
(51) Int. Cl.: B60Q 1/50, B60Q 3/04, B60Q 9/00

(54) **Optisches Anzeigesystem**

(30) Priorität: 11.10.2008 DE 102008051385
(71) Anmelder: MAN Nutzfahrzeuge AG, 80995 München (DE)
(72) Erfinder: Dörner, Karlheinz, 85757 Karlsfeld (DE); Brummer, Markus, 85301 Schweitenkirchen (DE); Tigges, Gunnar, 80992 München (DE); Schwertberger, Walter, 82278 Althegnenberg (DE); Krückl, Wolfgang, 85229 Markt Indersdorf (DE)

(57) **Zusammenfassung**

Eine optische Anzeigevorrichtung (1) für Kraftfahrzeuge, mit einer Vielzahl von Lichtquellen (2, 3), welche derart innerhalb des Kraftfahrzeuges angeordnet sind, dass das von ihnen ausgestrahlte Licht von vorne in Richtung der Augen eines Fahrzeugführers gelangt. Erfindungsgemäß sind die Lichtquellen wenigstens teilweise unabhängig voneinander steuerbar und wirken wenigstens teilweise zur Ausgabe einer Information an den Kraftfahrzeugführer zusammen.

## Beschreibung

Die vorliegende Erfindung bezieht sich auf ein optisches Anzeigesystem für Kraftfahrzeuge.

Aus dem Stand der Technik sind Anzeige- oder Warnsysteme bekannt, welche den Fahrer auf bestimmte Situationen hinweisen, beispielsweise auf Gefahren oder auch örtliche Gegebenheiten. Zur Information eines Fahrers sind dabei im Wesentlichen akustische, optische und haptische Signale denkbar. Akustische Informationen führen sehr schnell zu Akzeptanzproblemen, insbesondere, wenn sie in Situationen erfolgen, in denen der Fahrer sie für unnötig hält. Allein schon aufgrund der heute in Fahrzeugen installierten akustischen Warnungen bei Nichtanlegen des Gurts werden akustische Meldungen von Fahrern in der Regel kritisch beurteilt und teilweise abgelehnt.

Für optische Informationen des Fahrers werden in der Regel Anzeigen im Primärdisplay der Instrumentierung oder aber in einem Sekundärdisplay, einen Headupdisplay oder in einzelnen Bedienelementen verwendet. Ein Nachteil bei der Anzeige in einem Primärdisplay, einem Sekundärdisplay oder in einzelnen Bedienelementen ist, dass der Fahrer diese optischen Meldungen gegebenenfalls nicht wahrnimmt, wenn er nicht durch ein akustisches Signal darauf hingewiesen wird. Gründe für eine fehlende Wahrnehmung können beispielsweise sein, dass das entsprechende optische Signal von Elementen des Lenkrads teilweise auch in Abhängigkeit von einer Kopfhöhe des Fahrers verdeckt werden. Insbesondere in Fahrsituationen, die eine erhöhte Aufmerksamkeit des Fahrers erfordern, werden solche optischen Meldungen nicht wahrgenommen, bspw., weil der Blick des Fahrers durch die Windschutzscheibe hindurch auf die Fahrbahn gerichtet ist.

Wie oben erwähnt, sind nach dem Stand der Technik beispielsweise Headupdisplays bekannt. Diese sind jedoch relativ teuer, so dass sie in kleineren Fahrzeugen nicht so schnell zum Einsatz kommen, und zum anderen sind sie insbesondere in Nutzfahrzeugen aufgrund des geringen Neigungswinkels den Frontscheibe und des stark federnden Fahrersitzes auch nicht ohne weiteres einsetzbar.

Der vorliegenden Erfindung liegt daher die Aufgabe zugrunde, ein Anzeigesystem zur Verfügung zu stellen, welches optische Wahrnehmungen im Blickfeld des Fahrers ermöglicht und auch in Nutzfahrzeugen sowie in Fahrzeugen der unteren Preisklasse einsetzbar ist.

Dies wird erfindungsgemäß durch eine optische Anzeigevorrichtung nach Anspruch 1 erreicht. Vorteilhafte Ausführungsformen und Weiterbildungen sind Gegenstand der Unteransprüche.

Eine optische Anzeigevorrichtung für Fahrzeuge weist eine Vielzahl von Lichtquellen auf, welche derart innerhalb des Kraftfahrzeugs angeordnet sind, dass das von ihnen ausgestrahlte Licht von vorne in Richtung der Augen eines Fahrzeugführers gelangt. Erfindungsgemäß sind die Lichtquellen wenigstens teilweise unabhängig voneinander steuerbar und wirken wenigstens teilweise zur Ausgabe einer Information an einen Kraftfahrzeugführer zusammen.

Der Erfindung liegt die Erkenntnis zugrunde, dass optische Meldungen ohne ein zusätzliches akustisches Hinweissignal in direkter Blickrichtung des Fahrers liegen sollten, d.h. in derjenigen Blickrichtung, in der der Fahrer die Fahrsituationen vor seinem Fahrzeug beurteilt. Insbesondere auf diese Weise kann erreicht werden, dass der Fahrer diese optischen Meldungen wahrnimmt, ohne seinen Blick von der Straße abwenden zu müssen.

Damit wird wenigstens eine Lichtquelle in der Weise installiert, dass die Lichtstrahlen die Augen des Fahrers erreichen. Dies kann dabei durch eine direkte Sichtlinie zwischen den Augen des Fahrers und der Lichtquelle erreicht werden, aber auch über eine Umlenkung der Lichtstrahlen an der Frontscheibe oder an einer an geeigneter Position angebrachten Lichtumlenkung. Die Lichtquelle kann situationsbezogen derart angesteuert werden, dass der Fahrer anhand des erzeugten optischen Signals gezielt informiert oder gewarnt werden kann.

Vorzugsweise ist die Lichtquelle derart angeordnet, dass die Lichtstrahlen den Fahrer unabhängig von weiteren Gegebenheiten des Fahrzeuges wie beispielsweise durch die Stellung einer Sonnenblende, einer Stellung eines Lenkrades und dgl., erreichen.

Vorzugsweise sind die Lichtquellen oberhalb der Instrumentierung des Fahrzeugs angeordnet. Unter dem Begriff Instrumentierung werden dabei die üblicherweise in einem Kraftfahrzeug vorgesehenen Instrumente wie bspw. Geschwindigkeitsmessung, Drehzahlmesser u. dgl. verstanden. Durch diese Anordnung oberhalb der Instrumentierung kann sichergestellt werden, dass stets eine direkte Sichtlinie zwischen den Lichtquellen und dem Auge des Fahrers besteht. Vorzugsweise sind die Lichtquellen unmittelbar oberhalb der Instrumentierung angeordnet, um andererseits das Sichtfeld des Fahrers nicht übermäßig zu behindern.

Vorzugsweise weist die Anzeigevorrichtung eine Vielzahl von nebeneinander angeordneten Lichtquellen auf. Dabei können diese nebeneinander angeordneten Lichtquellen z. B. in einer Reihe nebeneinander angeordnet sein und zur Ausgabe einer Information zusammenwirken.

Bei einer weiteren vorteilhaften Ausführungsform ist die optische Anzeigevorrichtung derart gestaltet, dass durch Zusammenwirkung der Lichtquellen Symbole anzeigbar sind. Unter Symbolen werden einerseits Symbole wie Pfeile, Kreise, Balken u. dergl. verstanden, es wäre jedoch auch möglich, Buchstaben, Zahlen u. dergl. anzuzeigen.

In einer weiteren vorteilhaften Ausführungsform weist die optische Anzeigevorrichtung eine Steuerungseinrichtung auf, welche bewirkt, dass nebeneinander angeordnete Lichtquellen zeitlich hintereinander aktivierbar sind. Auf diese Weise können bspw. aus Sicht des Fahrers laufende, bzw. bewegliche Symbole angezeigt werden. Dies wird unter Bezugnahme auf die Figuren genauer erläutert.

In einer weiteren vorteilhaften Ausführungsform ist eine Vielzahl von Lichtquellen in einem Relais angeordnet. So ist es bspw. möglich, dass die Lichtquellen als Leuchtband ausgeführt sind, welches in Segmenten, abschnittsweise oder als Ganzes ansteuerbar ist. Dieses Leuchtband kann zum Beispiel aus einer Aneinanderreihung von mehreren Lichtquellen nebeneinander oder auch übereinander bestehen. Vorzugsweise sind die Lichtquellen in sich horizontal erstreckenden Reihen angeordnet. Diese Ausführungsform kann das oben erwähnte Leuchtband aufweisen und bspw. in horizontaler Ausrichtung oberhalb der Instrumentierung angebracht werden. Entsprechend dem Anzeigezweck kann jedoch auch eine vertikale oder andere Ausrichtung sowie ein anderer Ort der Anbringung gewählt werden.

In einer weiteren vorteilhaften Ausführungsform strahlen die Lichtquellen Licht in wenigstens zwei unterschiedlichen Farben aus. Allgemein wäre es möglich, als Lichtquellen einfarbige Lichtquellen wie bspw. insbesondere einfarbige Leuchtdioden, farbig umschaltbare Leuchtdioden oder Leuchtdioden in verschiedenen Farben zu verwenden. Dabei werden vorzugsweise Farben ausgewählt, welche aus einer Gruppe von Farben ausgewählt sind, welche rot, weiß, gelb, blau und grün, enthält. Dabei ist es bspw. möglich, die roten Signale bevorzugt bei sehr kritischen Warnsituationen zu verwenden und die gelben Signale in weniger kritischen Situationen. Die blauen oder grünen Signale können eher zur Fahrerinformation als zur Fahrerwarnung verwendet werden und können bspw. dazu dienen, den Fahrer auf andere Gegebenheiten aufmerksam zumachen, die er übersehen haben könnte, wie bspw. eine Restreichweite des Tankinhalts, die unter einer bestimmten Größe, wie z. B. 10 Kilometer, liegt.

In einer weiteren vorteilhaften Ausführungsform sind Gruppen von Lichtquellen gemeinsam ansteuerbar. Die oben erwähnten Lichtquellen eines Leuchtbands können also individuell, in Gruppen, oder als Einheit angesteuert werden. Auf diese Weise ist es möglich, den Fahrer auf eine enge Rechtskurve hinzuweisen, indem mit dem Leuchtband ein von links nach rechts durchlaufendes ein- oder mehrfarbiges Lauflicht erzeugt wird. Die Art dieses Lauflichts kann dabei in Abhängigkeit von der Krümmung bzw. dem Radius der Kurve vorgegeben werden. So wäre es möglich, die Durchlaufgeschwindigkeit des Lauflichts abhängig von der Krümmung bzw. dem Radius der Kurve vorzugeben.

Bei einer anderen Variante könnten abhängig von der Krümmung bzw. dem Krümmungsradius der Kurve einzeln angesteuerte Leuchtdioden oder in Gruppen angesteuerte Leuchtdioden in Kurvenrichtung als Lauflicht laufen. In einer weiteren Variante könnte in einem mittleren Kurvenradius ein gelbes Lauflicht verwendet werden und bei engen Kurven ein rotes Lauflicht. Auch die Kombination verschiedener Farben mit den oben beschriebenen Varianten der Lichtquellenansteuerung ist denkbar.

In einer weiteren vorteilhaften Ausführungsform weist die optische Anzeigevorrichtung eine Informationsaustauschvorrichtung zum Informationsaustausch mit Fahrassistenzsystemen des Fahrzeugs auf. Unter Fahrassistenzsystemen werden insbesondere aber nicht ausschließlich Systeme wie Navigationssysteme, auch Automatikgetriebe, Bremssysteme, Motorsteuerungssysteme u. dgl. verstanden.

So wäre es möglich, an den Fahrer eine Warnung vor Hindernissen beim Anfahren oder beim Abbiegen auszugeben. Speziell bei LKW's besteht die Gefahr, dass der LKW-Fahrer Objekte übersieht oder nicht sehen kann. Durch ein entsprechendes Leuchtband oder eine Anzeigevorrichtung könnte der Fahrer auf eine Kollisionsgefahr hingewiesen werden. Bei dieser Funktion müsste eine besonders bevorzugt fahrzeugautonome Umgebungssensorik vorhanden sein, um die Kollisionsgefahr zu erkennen. Diese Sensorik steht in Informationsaustausch mit der optischen Anzeigevorrichtung, welche dann den Fahrer auf eine bevorstehende Kollision hinweisen kann.

Eine weitere Nutzung wäre eine Assistenz zum Fahrspurwechsel. Hier wird z.B. vor einem Überholvorgang über die Anzeigevorrichtung bzw. das Leuchtband dem Fahrer mitgeteilt, ob die Überholspur frei ist. Bevorzugt ist bei dieser Funktion eine Sensorik vorgesehen, welche Verkehrsteilnehmer auf der Überholspur erkennt sowie auch deren Geschwindigkeiten relativ zur eigenen Fahrzeuggeschwindigkeit.

Die optische Anzeigevorrichtung könnte vom Fahrer auch als Information über wirtschaftliches Fahren genutzt werden. Hier werden dem Fahrer Anzeigen zur Reduzierung seines Kraftstoffverbrauch übermittelt. Übliche Anzeigen wären u.a. Getriebeeingriffe, wie Schaltinformationen, Hinweise zur Bedienung von Assistenzsystemen wie dem Tempomaten, Fahrgeschwindigkeitsbegrenzer, ACC, Bremsomat u. dgl.. Weiterhin können Höhendaten zur vorausschauenden Fahrweise ausgegeben werden, z. B. ein Hinweis auf eine Geschwindigkeitsreduzierung oder Erhöhung in Abhängigkeit vom Streckenprofil. Weiterhin könnte eine Gaspedalstellung für einen wirtschaftliche Beschleunigungsvorgang vorgegeben werden bzw. auch Hinweise darüber, dass der Fahrer das Fahrzeug ausrollen lassen soll, da in definierter Entfernung eine eingegebene Ausfahrt im Navigationssystem erkannt wurde.

Weiterhin wäre es auch möglich, eintretende Ereignisse von Infotainmentgeräten anzuzeigen bspw. einen eingehenden Telefonanruf, den Aktivierungszustand des Radioverkehrsfunks sowie die in der Navigation bekannten Pfeildarstellungen.

Die vorliegende Erfindung ist weiterhin auf ein Fahrzeug mit einer optischen Anzeigevorrichtung der oben beschriebenen Art sowie einem Fahrassistenzsystem gerichtet. Vorzugsweise kommuniziert diese optische Anzeigevorrichtung mit dem Fahrassistenzsystem, wobei hierunter verstanden wird, dass Daten zumindest von dem Fahrassistenzsystem an die Anzeigevorrichtung ausgegeben werden.

Vorzugsweise ist das Fahrassistenzsystem aus einer Gruppe von Assistenzsystemen ausgewählt, welche Navigationssysteme, Bremssysteme, Lenksysteme, Motorregelungssysteme, Kombinationen hieraus, u. dgl. aufweist.

Weitere vorteilhafte Ausführungsformen ergeben sich aus den beigefügten Zeichnungen:
- Fig. 1: eine schematische Darstellung einer erfindungsgemäßen optischen Anzeige- vorrichtung; und
- Fig. 2a - 2l: die Darstellung für mögliche Einsätze der optischen Anzeigevorrichtung bei unterschiedlichen Verkehrssituationen.

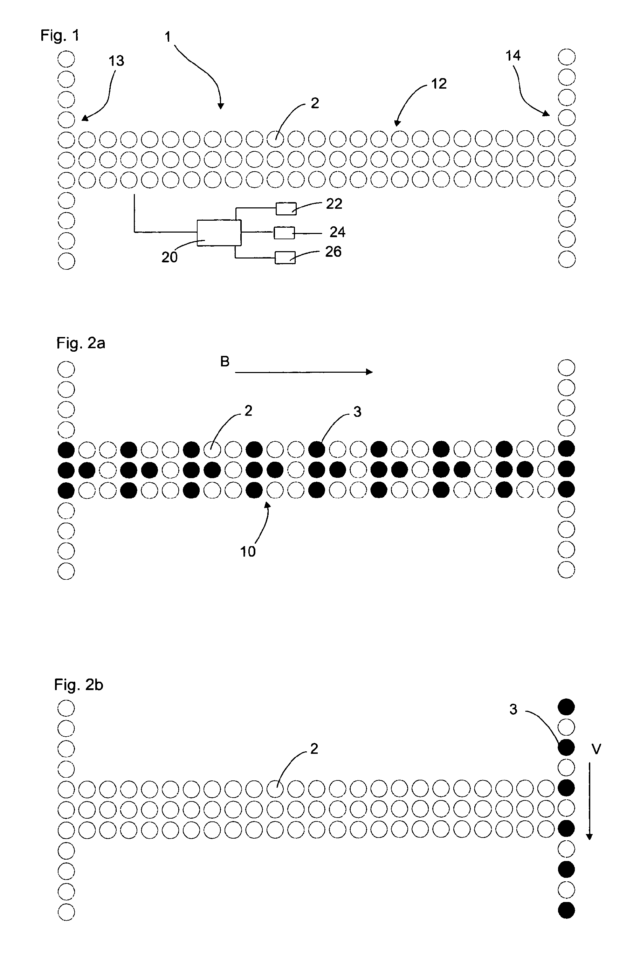

Fig. 1 zeigt eine erfindungsgemäße optische Anzeigevorrichtung 1. Diese optische Anzeigevorrichtung weist dabei eine Vielzahl von Lichtquellen 2 in Form von Leuchtdioden auf. Die Lichtquellen sind dabei in Form eines Arrays angelegt, wobei bei der in Fig. 1 gezeigten speziellen Ausführungsform auch links- und rechtsseitig vertikal verlaufende Streife 13, 14 mit Lichtquellen vorgesehen sind.

Das Bezugszeichen 20 bezieht sich auf eine Steuereinrichtung, welche die einzelnen Lichtquellen 2 der optischen Anzeigevorrichtung 1 ansteuert. Diese Steuerungseinrichtung 20 steht in Kommunikationsverbindung mit weiteren Assistenzsystemen 22, 24, 26 wobei es sich dabei bspw. um ein Navigationssystem 22, Fahrzeugsensorik wie Sensoren 24 oder auch ein Bremsassistenzsystem 26 handeln kann.

FIG. 2a zeigt eine erste Situation in der eine erfindungsgemäße optische Anzeigevorrichtung 1 Anwendung finden könnte. Neben den in den Figuren 2a - 2l gezeigten Situationen wären jedoch auch weitere Situationen denkbar, in denen über die optische Anzeigevorrichtung 1 Informationen ausgegeben werden könnten.

In den Figuren 2a - 2l sind jeweils nicht aktivierte Lichtquellen bzw. Leuchtdioden durch einen leeren Kreis dargestellt, rot leuchtende Lichtquellen durch schwarz ausgefüllte Kreise. Mit vertikalen Linien ausgefüllte Kreise stellen gelbe Leuchtdioden dar und mit horizontalen Linien ausgefüllte Kreise stellen grüne Leuchtdioden dar. Im Beispiel von Fig. 1 wird bspw. dem Fahrer eine scharfe Rechtskurve angezeigt. Zu diesem Zweck werden Symbole 10 in Form von Pfeilen dargestellt, welche sich entlang des Pfeils B von links nach rechts bewegen.

Bei der in Fig. 2b gezeigten Situation wird bspw. dem Fahrer angezeigt, dass er die Fahrspur auf der rechten Seite verlässt. Zu diesem Zweck sind rote Leuchtdioden 3 vorgesehen, wobei sich hier die jeweils leuchtenden Dioden von oben nach unten bewegen um auf diese Weise die Aufmerksamkeit des Fahrers zu erhöhen. Durch die Anzeige mit roten Leuchtdioden kann kenntlich gemacht werden, dass ein Verlassen der Spur und ein Befahren des Randstreifens unmittelbar bevorsteht.

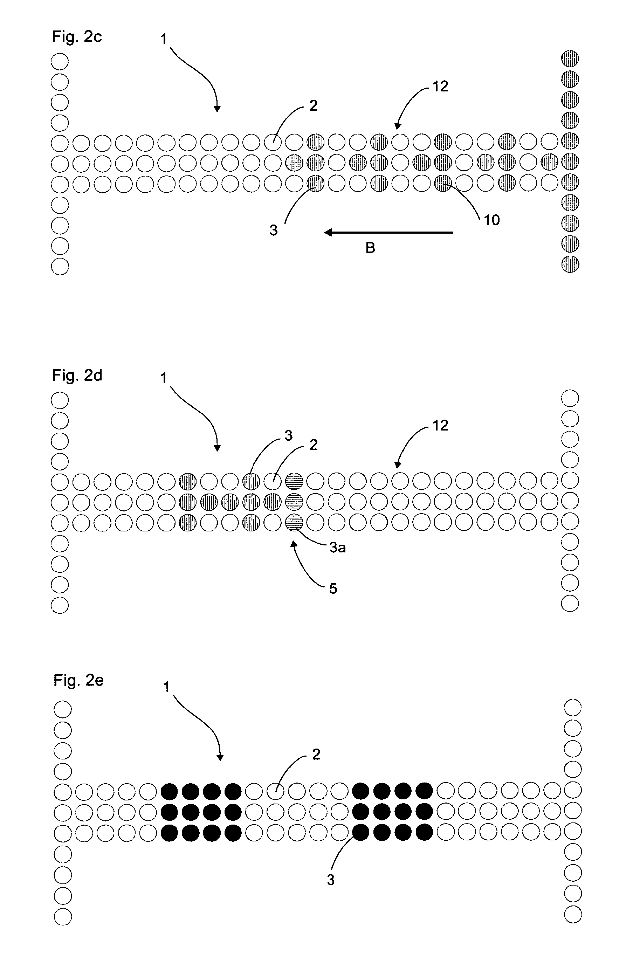

In Fig. 2c ist eine weitere Warnung für ein Spurverlassen auf der rechten Seite dargestellt. In diesem Falle werden zur Anzeige gelbe LEDs 3 verwendet, wobei sich auch hier die Pfeile 10 wieder in Bewegungsrichtung B von rechts nach links bewegen. Die Verwendung einer gelben Farbe könnte beispielsweise darauf hindeuten, dass die Spur in Kürze verlassen wird, jedoch noch nicht unmittelbar bevorsteht.

Die Fig. 2d zeigt eine Darstellung zu einer Spurführungsunterstützung. Dabei ist beispielsweise eine bestimmte Spur - wie die Mittelspur 5 - in vertikal untereinander angeordneten Lichtquellen 3a dargestellt, und ein Symbol, wie ein Pfeil 10, weist auf diese Spur 5 hin.

Ein weiteres Szenario zur Warnung des Fahrers könnte beispielsweise eine Notbremssituation sein (vgl. Fig. 2e). Hierbei ist es beispielsweise denkbar, gemäß aktueller Gefahrenstufe das Leuchtband in unterschiedlichen Farben (der Gefahrenstufe angepaßt) unterschiedlich blinkend oder dauernd anzusteuern. Auch ist es beispielsweise denkbar, in Notbremssituationen einzelne Segmente anzusteuern, die auf den Fahrer wie Bremslichter eines vorausfahrenden Fahrzeuges wirken. Diese Situation ist in Fig. 2e gezeigt, in der zwei Bremslichter 10 angedeutet werden und auf diese Weise eine Notbremswarnung ausgegeben wird.

Ein weiteres mögliches Szenario könnte beispielsweise eine einseitige oder beidseitige Spurverengung sein. So könnte beispielsweise eine blinkende Lichtreihe, wie sie häufig bei Einfahrten an Baustellen vorzufinden ist, frühzeitig in der Anzeigevorrichtung im Fahrzeug nachempfunden werden. Im Gegensatz zu einer Warnung vor einer engen Kurve kann dabei z. B. ein Lauflicht von der Seite, an der sich die Fahrbahnverengung befindet, nur bis zur Mitte des Leuchtbandes laufen und nicht ganz zur jeweiligen anderen Seite, wie es bei einer engen Kurve der Fall wäre. Eine Voraussetzung für diese Funktion ist jedoch eine vorausschauende Erkennung einer Fahrspurverengung. Diese kann beispielsweise durch fahrzeugautonome vorausschauende Sensorik oder durch Funkdatenkommunikation in Verbindung mit satellitengestützter Position und Fahrtrichtungserkennung des Fahrzeuges realisiert werden. Bei diesem Beispiel könnte auch eine vertikale Anordnung einer Lichtquellenreihe eingesetzt werden, die durch eine geeignete Ansteuerung beispielsweise in Form von Blinken, Wechselblinken oder eines Lauflichtes den Fahrer vor dem Überfahren der Fahrbahngrenzen warnt.

Eine weitere Anwendung wäre eine Assistenz zur Spurhaltung bei engen Fahrspuren, wie sie zum Beispiel an Baustellen anzutreffen sind. Hier könnte dem Fahrer mit dem Leuchtband eine Abweichung des Fahrzeuges von einer Fahrzeugmitte - wie oben erklärt - nach links oder rechts signalisiert werden. Denkbar wäre es beispielsweise, die Position der Fahrzeugspurmitte mit einer Farbe im Leuchtband anzuzeigen und die Abweichung des Fahrzeuges mit einer zweiten Farbe. Im Stand der Technik bekannte Assistenzsyteme warnen den Fahrer erst, wenn er den Rand einer Fahrspur erreicht. Demgegenüber hat die hier beschriebene Vorgehensweise den Vorteil, dass der Fahrer bereits vorher optisch auf die Abweichung von der Fahrspurmitte hingewiesen wird. Eine Voraussetzung für eine derartige Funktion ist auch hier die Erkennung der Position des Fahrzeuges relativ zur markierten Fahrspur. Dies könnte zum Beispiel durch fahrzeugautonome vorausschauende Sensorik oder auch durch Funkdatenkommunikation in Verbindung mit satellitengestützter Positions-und Fahrtrichtungserkennung des Fahrzeuges realisiert werden.

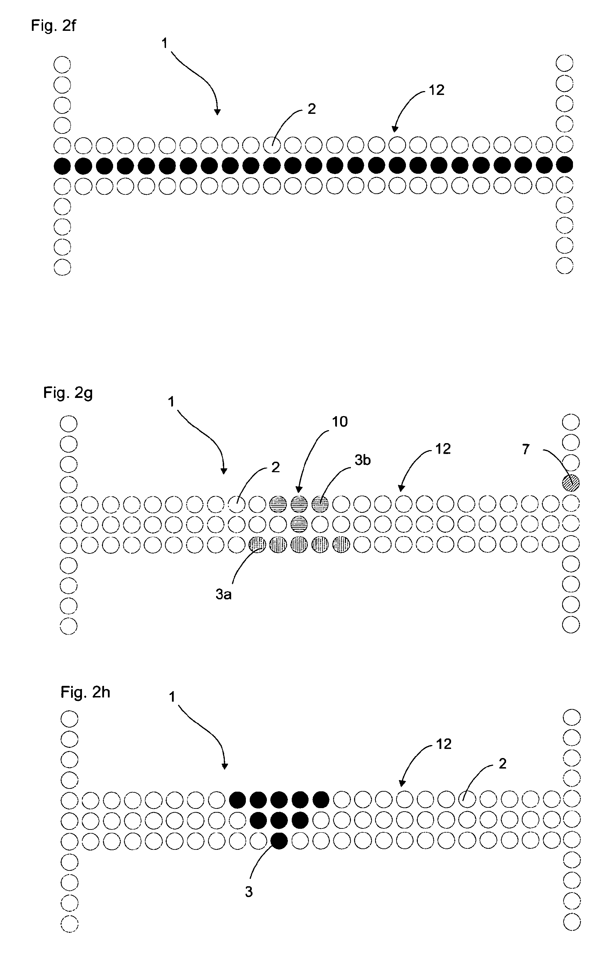

Fig. 2f zeigt ein weiteres Beispiel für eine mögliche Anzeige in Form einer Anfahrwarnung. Hier könnte dem Fahrer signalisiert werden, dass sich das Fahrzeug möglicherweise ungewollt in Bewegung gesetzt hat.

In Fig. 2g ist eine Abstandsinformation dargestellt, wobei hier ein Symbol wie ein Pfeil in einer ersten Farbe und ein weiters Symbol in Form eines horizontalen Balkens in einer weiteren Farbe dargestellt wird.

Daneben könnte man ein Lauflicht 7 verwenden, welches ein Maß für einen Abstand ausgibt.

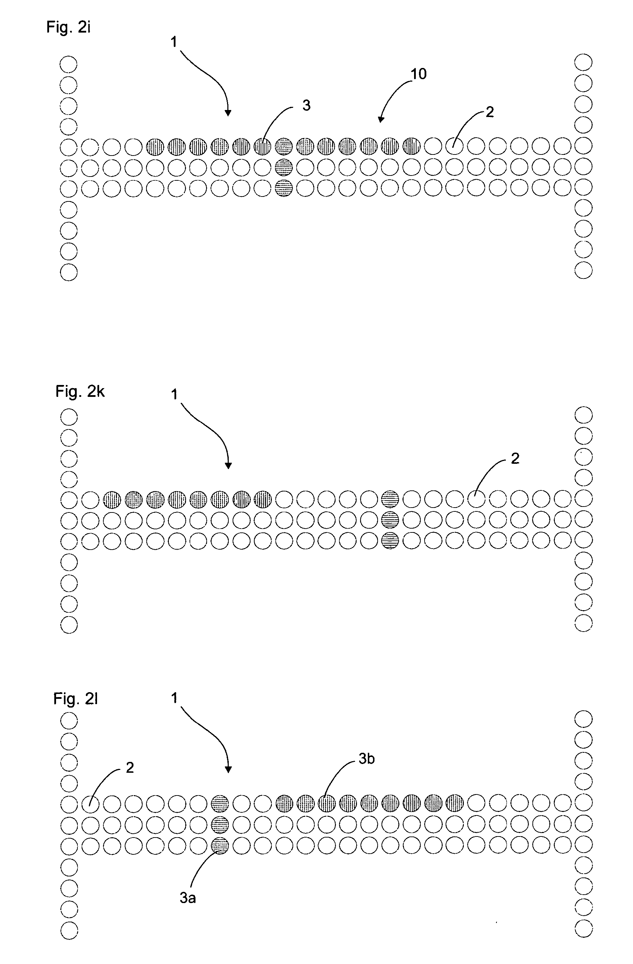

Fig. 2h zeigt eine weitere Möglichkeit für die Ausgabe einer Abstandsinformation. Zusätzlich wäre es auch hier möglich, Zahlenwerte für einen bestimmten Abstand, beispielsweise in Metern, auszugeben. Daneben könnten jedoch auch Rangierabstände ausgegeben werden, was insbesondere auch im Bereich der Nutzfahrzeuge sehr hilfreich wäre. Weiterhin könnte, wie in den Figuren 2i bis 2l gezeigt, die optische Anzeigevorrichtung auch als Ampelassistent verwendet werden. Hierbei geht es darum, dem Fahrer zu signalisieren, ob er in einem Geschwindigkeitsbereich fährt, in dem er die nächste Ampel während deren Grünphase erreicht. So könnte beispielsweise die in Fig. 2i gezeigte Anzeige dazu dienen, dem Fahrer anzuzeigen, dass er die Ampel bei Beibehalten der Geschwindigkeit während ihrer Grünphase passieren kann. Genauer kann z. B. der Geschwindigkeitsbereich, in dem der Fahrer die nächste Ampel in deren Grünphase erreicht, durch die Breite eines vorzugsweise in grüner Farbe leuchtenden Lichtbalkens 10 innerhalb des Leuchtbandes dargestellt werden.

Die Breite in der Position dieses Lichtbalkens kann innerhalb dieses Leuchtbandes abhängig von diesem Geschwindigkeitsbereich vorgegeben werden. Bevorzugt kann dem linken Rand des Leuchtbandes die Geschwindigkeit 0 km/h und dem rechten Rand die maximal mögliche Geschwindigkeit des Fahrzeuges zugeordnet sein. Die aktuelle Fahrgeschwindigkeit relativ zu dem grün dargestellten Lichtbalken kann innerhalb des Leuchtbands in einer anderen Farbe, hier durch 3 übereinander angeordnete gelbe Leuchtdioden, signalisiert werden.

Liegt die aktuelle Fahrgeschwindigkeit innerhalb des grün dargestellten Lichtbalkens, so wird dem Fahrer signalisiert, dass er die nächste Ampel in der Grünphase erreicht. Durch Anpassung seiner Fahrgeschwindigkeit kann der Fahrer diesen Zustand erreichen. Eine Voraussetzung für diese Funktion ist jedoch eine Funkdatenkommunikation in Verbindung mit satellitengestützter Positions- und Fahrtrichtungserkennung des Fahrzeuges.

Liegt die Geschwindigkeit, mit der der Fahrer die Grünphase der Ampel erreichen kann, oberhalb der aktuell zulässigen Höchstgeschwindigkeit des Fahrzeuges, so kann dem Fahrer dies durch Anzeige des Leuchtbalkens an dem Rand des Leuchtbandes dargestellt werden, dem die Geschwindigkeit 0 km/h zugeordnet ist. Dies signalisiert dem Fahrer, dass er das Fahrzeug zur nächsten Ampel hin ausrollen lassen sollte. Eine Voraussetzung für diese Funktion ist jedoch die Kenntnis der aktuell zulässigen Höchstgeschwindigkeit des Fahrzeuges, welche beispielsweise aus zusätzlichen Daten zu einer Navigationsdatenbank in Verbindung mit genauer Positionsbestimmung des Fahrzeuges oder durch Fahrstrecken- und Verkehrszeichen bezogener Funkdatenkommunikation bestimmt werden kann.

Weiterhin kann die Funktion genutzt werden, um den Fahrer vor einer roten Ampel optisch zu warnen, wenn anhand des Geschwindigkeitsprofils des Fahrzeuges erkennbar ist, dass der Fahrer eine rote Ampel übersehen haben könnte. Daneben kann die Funktion auch genutzt werden, um den Fahrer bei unerlaubtem Anfahren an einer roten Ampel zu warnen (vgl. Fig. 2f).

In Fig. 2k ist eine Situation angezeigt, die dem Fahrer signalisiert, dass seine Geschwindigkeit zu hoch ist, um eine grüne Ampelphase zu erreichen. In Fig. 2l ist eine Situation angezeigt, in der dem Fahrer signalisiert wird, dass seine Geschwindigkeit zu niedrig ist, um eine grüne Ampelphase zu erreichen. Im letzteren Fall ist der Balken mit der Vielzahl der grünen Leuchtdioden rechts von der Sollgeschwindigkeit angeordnet und im Fall von Fig. 2k links davon, d. h. zu niedrigen Geschwindigkeiten hin.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: optische Anzeigevorrichtung
- 2, 3: Lichtquelle
- 5: Spur
- 7: Lauflicht
- 10: Symbol
- 13, 14: seitliche Streife
- 20: Steuerungseinrichtung
- 22, 24, 26: Fahrassistenzsystem

## Patentansprüche

1. Optische Anzeigevorrichtung (1) für Kraftfahrzeuge, mit einer Vielzahl von Lichtquellen (2, 3), welche derart innerhalb des Kraftfahrzeugs angeordnet sind, dass das von Ihnen ausgestrahlte Licht von vorne in Richtung der Augen eines Fahrzeugführers gelangt,
**dadurch gekennzeichnet, dass**
die Lichtquellen (2,3) wenigstens teilweise unabhängig voneinander steuerbar sind und wenigstens teilweise zur Ausgabe einer Information an den Kraftfahrzeugführer zusammenwirken.

2. Anzeigevorrichtung (1) nach Anspruch 1,
**dadurch gekennzeichnet, dass**
die Lichtquellen (2, 3) oberhalb der Instrumentierung des Fahrzeugs angeordnet sind.

3. Anzeigevorrichtung (1) nach Anspruch 1,
**dadurch gekennzeichnet, dass**
die Anzeigevorrichtung (1) eine Vielzahl von nebeneinander angeordneten Lichtquellen (2, 3) aufweist.

4. Anzeigevorrichtung (1) nach wenigstens einem der vorangegangenen Ansprüche,
**dadurch gekennzeichnet, dass**
die optische Anzeigevorrichtung (1) derart gestaltet sind, dass durch Zusammenwirkung der Lichtquellen Symbole (10) anzeigbar sind.

5. Anzeigevorrichtung (1) nach wenigstens einem der vorangegangenen Ansprüche,
**dadurch gekennzeichnet, dass**
die optische Anzeigevorrichtung (1) eine Steuerungseinrichtung (20) aufweist, welche bewirkt, dass nebeneinander angeordnete Lichtquellen zeitlich hintereinander aktivierbar sind.

6. Anzeigevorrichtung (1) nach wenigstens einem der vorangegangenen Ansprüche,
**dadurch gekennzeichnet, dass**
eine Vielzahl von Lichtquellen (2, 3) in einem Array (12) angeordnet ist.

7. Anzeigevorrichtung (1) nach wenigstens einem der vorangegangenen Ansprüche,
**dadurch gekennzeichnet, dass**
die Lichtquellen (2, 3) Leuchtdioden (2, 3) sind.

8. Anzeigevorrichtung (1) nach wenigstens einem der vorangegangenen Ansprüche,
**dadurch gekennzeichnet, dass**
die Lichtquellen (2,3) in sich horizontal erstreckenden Reihen angeordnet sind.

9. Anzeigevorrichtung (1) nach wenigstens einem der vorangegangenen Ansprüche,
**dadurch gekennzeichnet, dass**
die Lichtquellen (2, 3) Licht in wenigstens zwei unterschiedlichen Farben ausstrahlen.

10. Anzeigevorrichtung (1) nach wenigstens einem der vorangegangenen Ansprüche,
**dadurch gekennzeichnet, dass**
Gruppen von Lichtquellen (2, 3) gemeinsam ansteuerbar sind.

11. Anzeigevorrichtung (1) nach wenigstens einem der vorangegangenen Ansprüche, **dadurch gekennzeichnet, dass**
die optische Anzeigevorrichtung (1) eine Informationsaustauschvorrichtung (20) zum Informationsaustausch mit Fahrassistenzsystemen (22, 24, 26) des Fahrzeugs aufweist.

12. Fahrzeug mit einer optischen Anzeigevorrichtung (1) nach wenigstens einem der vorangegangenen Ansprüche und einem Fahrassistenzsystem (22, 24, 26).

13. Fahrzeug nach Anspruch 12,
**dadurch gekennzeichnet, dass**
das Fahrassistenzsystem (22, 24, 26) aus einer Gruppe von Assistenzsystemen ausgewählt ist, welche Navigationssysteme, Bremssysteme, Lenksysteme, Motorregelungssysteme, Kombinationen hieraus und dergleichen aufweist.
